# EUROPEAN PATENT APPLICATION

(11) **EP 4 592 746 A1**
(43) Date of publication of application: **30.07.2025**
(21) Application number: 23883111.9
(22) Date of filing: 26.10.2023
(51) Int. Cl.: G03B 5/04, G03B 17/12, G02B 27/64, H02K 41/035, G03B 5/00

(54) **IMAGE STABILIZER AND ELECTRONIC DEVICE INCLUDING SAME**

(30) Priority: 26.10.2022 KR 20220138859; 30.11.2022 KR 20220164301
(71) Applicant: Samsung Electronics Co., Ltd., Suwon-si, Gyeonggi-do 16677 (KR)
(72) Inventor: KIM, Sewon, Suwon-si, Gyeonggi-do 16677 (KR)
(74) Representative: HGF
(86) International application number: PCT/KR2023/016702
(87) International publication number: WO 2024/091006

(57) **Abstract**

An electronic device according to an embodiment of the present disclosure includes an image stabilizer for correcting shaking of a camera module. The image stabilizer may include: a lens part including at least one lens; an actuator capable of driving the lens part in a first direction and a second direction orthogonal to the first direction; and a housing stably placed on the actuator. The actuator may include: a stopper for restricting a movement of a carrier in a third direction orthogonal to the first direction and the second direction; the carrier including multiple magnets on a first surface facing in the second direction and a second surface parallel to the first surface; and a container including multiple coils which correspond to the multiple magnets and control the electromagnetic forces of the multiple magnets.

## Description

### [Technical Field]

The disclosure relates to an image stabilizer and an electronic device including the same.

### [Background Art]

Various electronic devices, such as a smartphone, a tablet PC, a portable multimedia player (PMP), a personal digital assistant (PDA), a laptop personal computer (PC), a wrist watch, and a head-mounted display (HMD), may include a camera and may capture an image using the camera.

When capturing an image using a camera included in an electronic device, focus control and/or compensation for shaking of an optical module is required to obtain a clear image.

Types of optical image stabilizers (OIS) used in general cameras include a camera tilting type and a lens shift type.

The lens shift type compensates for shaking of an optical module through linear motion on a plane parallel to the imaging plane of an image sensor.

The camera tilting type moves a camera lens and an image sensor together to make an optical axis match with a virtual axis connecting an object to the center of a camera module.

In general, an image stabilizer may control magnets and coils arranged in the x-axis and y-axis directions, respectively, to align the optical axis with the virtual axis connecting an object to the center of the camera module.

The above-described information may be provided as related art for the purpose of assisting in understanding the disclosure. No assertion or decision is made as to whether any of the above might be applicable as prior art with regard to the disclosure.

### [Disclosure of Invention]

### [Technical Problem]

When an image stabilizer is moved by magnets and coils, the driving force of the image stabilizer may decrease depending on the separation distance between the magnets and the coils. The angle at which focus adjustment and/or compensation for shaking of an optical module may be performed may be limited by the driving force of the image stabilizer.

An image stabilizer according to an embodiment of the disclosure and an electronic device including the same may have an image stabilizer driving system arranged on a surface facing the camera lens.

The technical subjects pursued in the disclosure may not be limited to the above-mentioned technical subjects, and other technical subjects which are not mentioned may be clearly understood from the following descriptions by those skilled in the art to which the disclosure pertains.

### [Solution to Problem]

According to an embodiment of the disclosure, an electronic device may include an image stabilizer configured to compensate for shaking of a camera module.

According to an embodiment of the disclosure, the image stabilizer may include a lens array including at least one lens, an actuator configured to drive the lens array in a first direction and a second direction orthogonal to the first direction, and a housing mounted on the actuator.

According to an embodiment of the disclosure, the actuator may include a stopper configured to restrict movement of the carrier in a third direction orthogonal to the first direction and the second direction, a carrier including multiple magnets on a first side surface in the second direction and a second side surface parallel to the first side surface, and a container including multiple coils corresponding to the multiple magnets and configured to control the electromagnetic forces of the multiple magnets. However, the disclosure is not limited thereto.

According to an embodiment of the disclosure, the image stabilizer may include a lens array including at least one lens, an actuator configured to drive the lens array in a first direction and a second direction orthogonal to the first direction, and a housing mounted on the actuator.

According to an embodiment of the disclosure, the actuator may include a stopper configured to restrict movement of the carrier in a third direction orthogonal to the first direction and the second direction, a carrier including multiple magnets on a first side surface in the second direction and a second side surface parallel to the first side surface, and a container including multiple coils corresponding to the multiple magnets and configured to control the electromagnetic forces of the multiple magnets. However, the disclosure is not limited thereto.

### [Advantageous Effects of Invention]

In an image stabilizer according to an embodiment of the disclosure and an electronic device including the same, the driving force of the image stabilizer may be maintained or enhanced by arranging the image stabilizer driving system on the surface facing the camera lens.

In the image stabilizer according to an embodiment of the disclosure and the electronic device including the same, by enhancing the driving force of the image stabilizer, the angle for performing focus adjustment and/or compensation for shaking of the optical module may be increased.

Advantageous effects obtainable from the disclosure may not be limited to the above-mentioned effects, and other effects which are not mentioned may be clearly understood from the following descriptions by those skilled in the art to which the disclosure pertains.

### [Brief Description of Drawings]

FIG. 1 is a block diagram of an electronic device according embodiments of the disclosure in a network environment.
FIG. 2 is a block diagram exemplifying a camera module according to various embodiments.
FIG. 3A is a perspective view illustrating an image stabilizer according to an embodiment of the disclosure.
FIG. 3B is a perspective view illustrating an image stabilizer with a housing removed, according to an embodiment of the disclosure.
FIG. 3C is a side view of the image stabilizer of FIG. 3B.
FIG. 4A is a perspective view illustrating the image stabilizer with a housing, a stopper, and a container removed, according to an embodiment of the disclosure.
FIG. 4B is a perspective view illustrating the image stabilizer with the lens array removed from FIG. 4A.
FIG. 5A is a plan view of the image stabilizer with the housing, the stopper, and the lens array removed, according to an embodiment of the disclosure.
FIG. 5B is a perspective view illustrating the image stabilizer of FIG. 5A.
FIG. 6A is a perspective view illustrating a first driving element, a second driving element, and a third driving element of the image stabilizer according to an embodiment of the disclosure.
FIG. 6B is a plan view of the first driving element, the second driving element, and the third driving element of FIG. 6A.
FIG. 7 is a diagram illustrating the operation of the image stabilizer according to an embodiment of the disclosure.
FIG. 8 is a graph illustrating the driving force when the image stabilizer moves in the first direction (the x-axis direction) according to an embodiment of the disclosure.
FIG. 9 is a graph illustrating the driving force when the image stabilizer moves in the second direction (the y-axis direction) according to an embodiment of the disclosure.

### [Mode for the Invention]

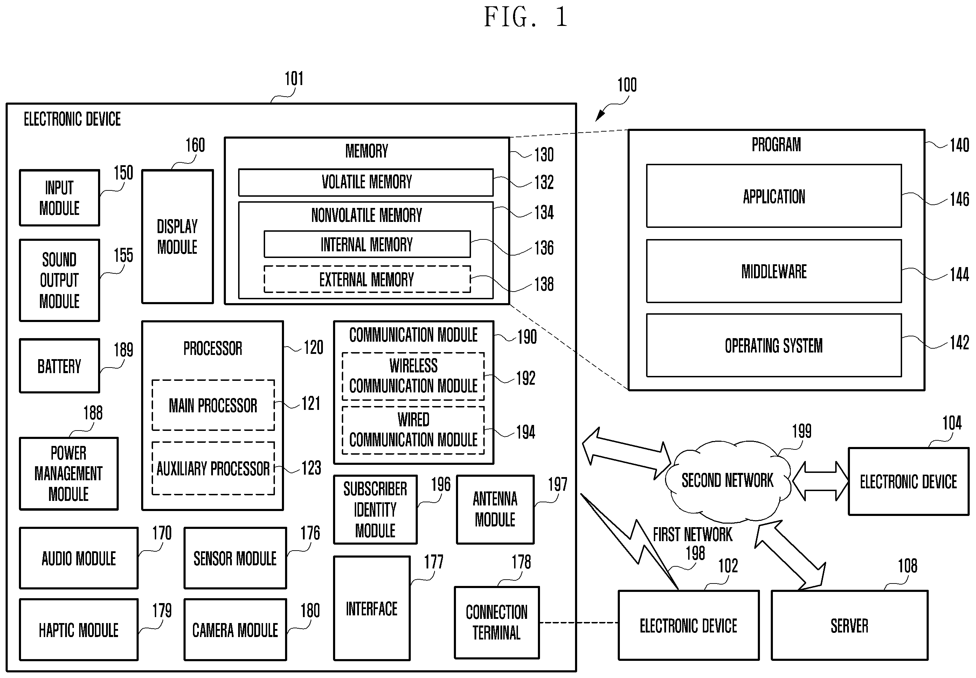

Fig. 1 is a block diagram illustrating an electronic device 101 in a network environment 100 according to various embodiments.

Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

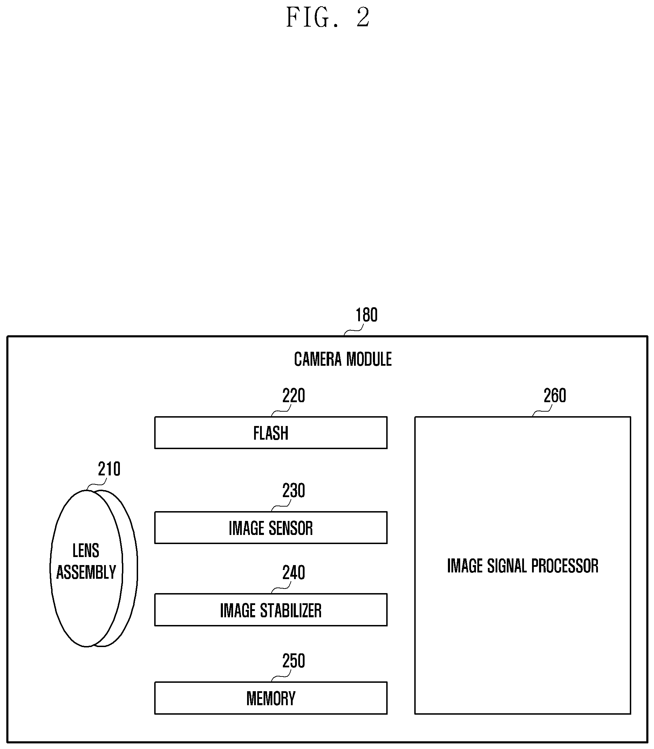

FIG. 2 is a block diagram illustrating a camera module 180 according to various embodiments. Referring to FIG. 2, the camera module 180 may include a lens assembly 210, a flash 220, an image sensor 230, an image stabilizer 240, a memory 250 (e.g., a buffer memory), or an image signal processor 260. The lens assembly 210 may collect light emitted from an object to be imaged. The lens assembly 210 may include one or more lenses. According to an embodiment, the camera module 180 may include multiple lens assemblies 210. In this case, the camera module 180 may configure, for example, a dual camera, a 360-degree camera, or a spherical camera. Some of multiple lens assemblies 210 may have the same lens properties (e.g., angle of view, focal length, auto-focus, f-number, or optical zoom), or at least one of the lens assemblies may have one or more lens properties different from those of the other lenses. The lens assemblies 210 may include, for example, a wide-angle lens or a telephoto lens.

The flash 220 may emit light used to enhance light emitted or reflected from an object. According to an embodiment, the flash 220 may include one or more light-emitting diodes (e.g., red-green-blue (RGB) LEDs, white LEDs, infrared LEDs, or ultraviolet LEDs), or a xenon lamp. The image sensor 230 may acquire an image corresponding to an object by converting light emitted or reflected from the object and transmitted through the lens assembly 210 into an electrical signal. According to an embodiment, the image sensor 230 may include one image sensor selected from image sensors having different properties, such as an RGB sensor, a black and white (BW) sensor, an IR sensor, or a UV sensor, multiple image sensors having the same properties, or multiple image sensors having different properties. Each image sensor included in the image sensor 230 may be implemented using, for example, a charge-coupled device (CCD) sensor or a complementary metal oxide semiconductor (CMOS) sensor.

The image stabilizer 240 may move at least one lens included in the lens assembly 210 or the image sensor 230 in a specific direction or may control an operating characteristic of the image sensor 230 (e.g., adjusting read-out timing) in response to the movement of the camera module 180 or the electronic device 101 including the same. This at least partially compensates for the shaking of the image caused by the movement with respect to a subject to be photographed. According to an embodiment, the image stabilizer 240 may detect the movement of the camera module 180 or the electronic device 101 by using a gyro sensor (not illustrated) or an acceleration sensor (not illustrated) disposed inside or outside the camera module 180. The memory 250 may at least temporarily store at least some of the images acquired via the image sensor 230 for the next image processing task. For example, when image acquisition by shutter is delayed or multiple images are acquired at a high speed, the acquired original images (e.g., Bayer-patterned images or high-resolution images) are stored in the memory 250, and copy images (e.g., low-resolution images) corresponding to the original images may be previewed through a display device 160. Then, when predetermined conditions (e.g., a user input or a system command) are satisfied, at least some of the original images that have been stored in the memory 250 may be acquired and processed by, for example, the image signal processor 260. According to an embodiment, the memory 250 may be configured either as at least a portion of the memory 130 or as a separate memory that operates independently.

The image signal processor 260 may perform one or more image processing operations on the images acquired using the image sensor 230 or the images stored in the memory 250. The one or more image processes may include, for example, depth map generation, 3D modeling, panorama generation, feature point extraction, image synthesis, or image compensation (e.g., noise reduction, resolution adjustment, brightness adjustment, blurring, sharpening, or softening). Additionally or alternatively, the image signal processor 260 may perform control (e.g., exposure time control, or read-out timing control) for at least one of the components (e.g., the image sensor 230) included in the camera module 180. The images processed by the image signal processor 260 may be stored back in the memory 250 for further processing or may be provided to components outside the camera module 180 (e.g., the memory 130, the display module 160, the electronic device 102, the electronic device 104, or the server 108). According to an embodiment, the image signal processor 260 may be configured as at least a portion of the processor 120 or may be configured as a separate processor operated independently of the processor 120. When the image signal processor 260 is configured as a processor separate from the processor 120, the processor 120 may cause at least one image, which is processed by the image signal processor 260, to be displayed through the display device 160 as it is or after further image processing.

According to an embodiment, the electronic device 101 may include multiple camera modules 180, each having different properties (e.g., angle of view) or functions. In this case, for example, the multiple camera modules 180 may include at least one of a wide-angle camera, a telephoto camera, or an IR camera (a time-of-flight camera or a structured light camera). For example, multiple camera modules including lenses having different angles of view may be provided, and the electronic device may be controlled to change the angle of view by being variable depending on a user's selection. According to an embodiment, for example, at least one of the multiple camera modules 180 may be a front camera, and at least one of the others may be a rear camera.

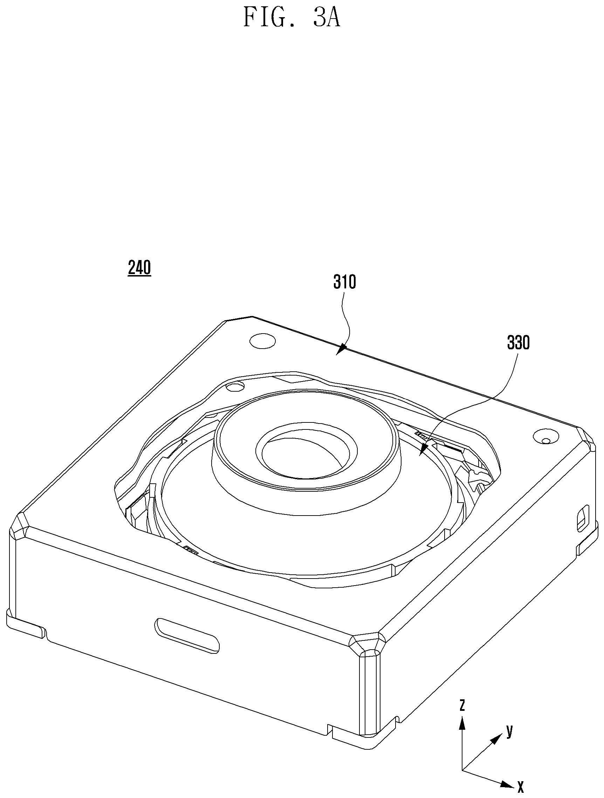

FIG. 3A is a perspective view illustrating an image stabilizer 240 according to an embodiment of the disclosure.

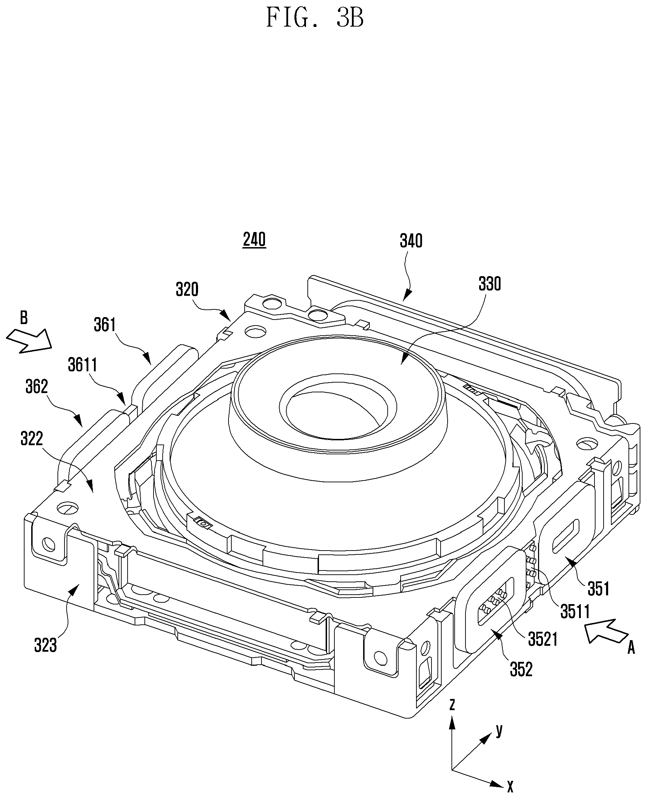

FIG. 3B is a perspective view illustrating the image stabilizer 240 with a housing 310 removed, according to an embodiment of the disclosure.

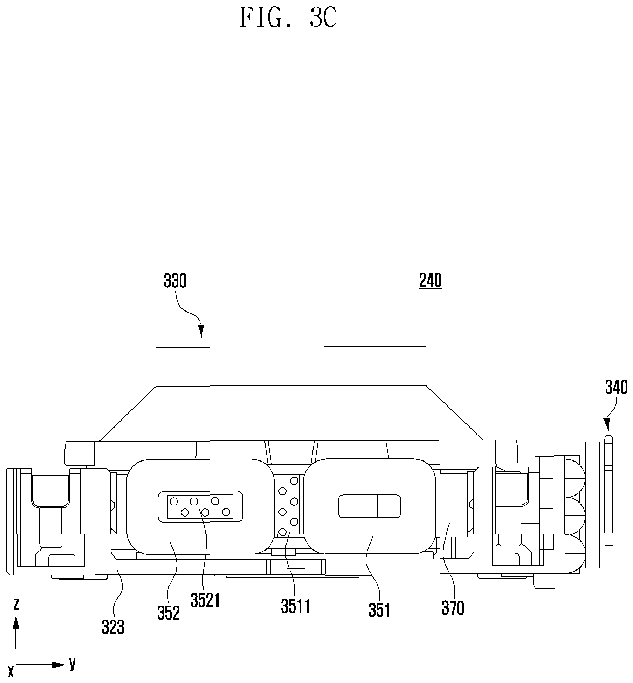

FIG. 3C is a side view of the image stabilizer 240 of FIG. 3B.

Referring to FIGS. 3A, 3B, and 3C, the image stabilizer 240 may include a housing 310 and a lens array 330.

In an embodiment of the disclosure, the image stabilizer 240 may include the housing 310, an actuator 320, and the lens array 330.

In an embodiment of the disclosure, the housing 310 may provide a structure in which the actuator 320 and/or the lens array 330 may be coupled or mounted. The housing 310 may be coupled to at least a portion of the electronic device 101.

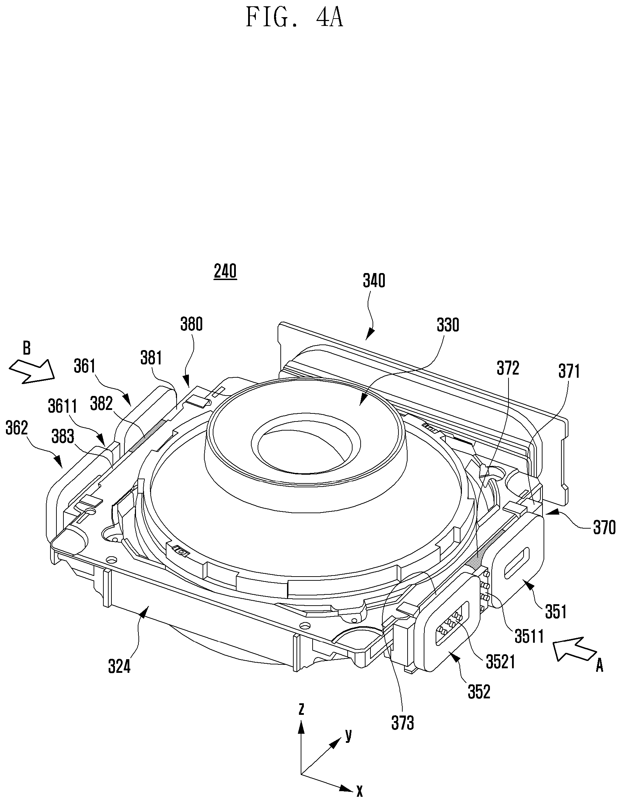

In an embodiment of the disclosure, the actuator 320 may include a stopper 322 and a container 323. The actuator 320 may have an exterior formed by coupling the stopper 322 and the container 323. The actuator 320 may have an inner space defined by coupling the stopper 322 and the container 323. A carrier (e.g., the carrier 324 in FIG. 4A) may be disposed in the space formed by coupling the stopper 322 and the container 323.

In an embodiment of the disclosure, the first direction may be the x-axis direction, the second direction may be the y-axis direction, and the third direction may be the z-axis direction. However, the disclosure is not limited thereto. The first direction and the second direction may be orthogonal to each other, and the third direction may be orthogonal to the plane defined by the orthogonality of the first direction and the second direction.

In an embodiment of the disclosure, the actuator 320 may have multiple coils 351, 352, 361, and 362 arranged on opposite side surfaces perpendicular to the x-axis direction.

In an embodiment of the disclosure, the actuator 320 may include a first coil 351 and a second coil 352 on a first side surface A perpendicular to the x-axis direction. The actuator 320 may include a third coil 361 and a fourth coil 362 on a second side surface B perpendicular to the x-axis direction.

In an embodiment of the disclosure, the actuator 320 may include an auto-focus (AF) coil 340 in a direction parallel to the x-axis.

In an embodiment of the disclosure, the first side surface A and the second side surface B may be arranged to face each other. The first side surface A and the second side surface B may be substantially parallel to each other.

In an embodiment of the disclosure, the first coil 351 disposed on the first side surface A may interact with a first magnet 370 disposed on the carrier (e.g., the carrier 324 in FIG. 4A).

In an embodiment of the disclosure, the stopper 322 may provide a guide for a rotation angle when the lens array 330 and/or the carrier (e.g., the carrier 324 in FIG. 4A) moves or may prevent the lens array 330 and/or the carrier (e.g., the carrier 324 in FIG. 4A) from deviating by restricting rotation and/or movement.

In an embodiment of the disclosure, the lens array 330 may include one or more lenses. The stopper 322 may restrict the movement of the carrier (e.g., the carrier 324 in FIG. 4A) in the third direction (e.g., the z-axis direction).

In an embodiment of the disclosure, a current passing through the first coil 351 may be controlled by a first driving integrated circuit (IC) 3511. The first driving IC 3511 may be disposed between the first coil 351 and the second coil 352.

In an embodiment of the disclosure, a second driving IC 3521 may control a current passing through the second coil 352. The second driving IC 3521 may be disposed in a hole of the second coil 352.

In an embodiment of the disclosure, a current passing through the third coil 361 may be controlled by a third driving IC 3611. The third driving IC 3611 may be disposed between the third coil 361 and the fourth coil 362.

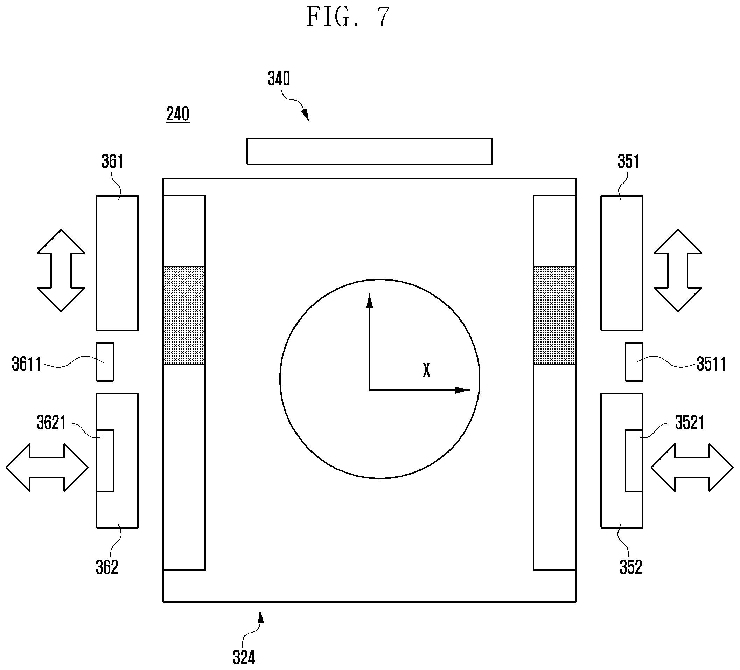

In an embodiment of the disclosure, the first coil 351 and the second coil 352 may correspond to the third coil 361 and the fourth coil 362, respectively. The first coil 351 may correspond to the third coil 361, and the second coil 352 may correspond to the fourth coil 362. The first coil 351 and the third coil 361 may have the same structure. The second coil 352 and the fourth coil 362 may have the same structure. The first driving IC 3511 and the third driving IC 3611 may have the same structure. Referring to FIGS. 3A, 3B, 3C, and 7, the fourth driving IC (e.g., the fourth driving IC 3621 in FIG. 7) may have the same structure as the second driving IC 3521.

In FIGS. 3A, 3B, and 3C, the structures and shapes of the first coil 351, the second coil 352, the first driving IC 3511, and the second driving IC 3521 may be the same as those of the corresponding third coil 361, the fourth coil 362, the third driving IC 3611, and the fourth driving IC 3621.

Referring to FIG. 7, a current passing through the fourth coil 362 may be controlled by the fourth driving IC 3621. The fourth driving IC 3621 may be disposed in a hole of the fourth coil 362.

FIG. 4A is a perspective view illustrating the image stabilizer 240 with the housing 310, the stopper 322, and the container 323 removed, according to an embodiment of the disclosure.

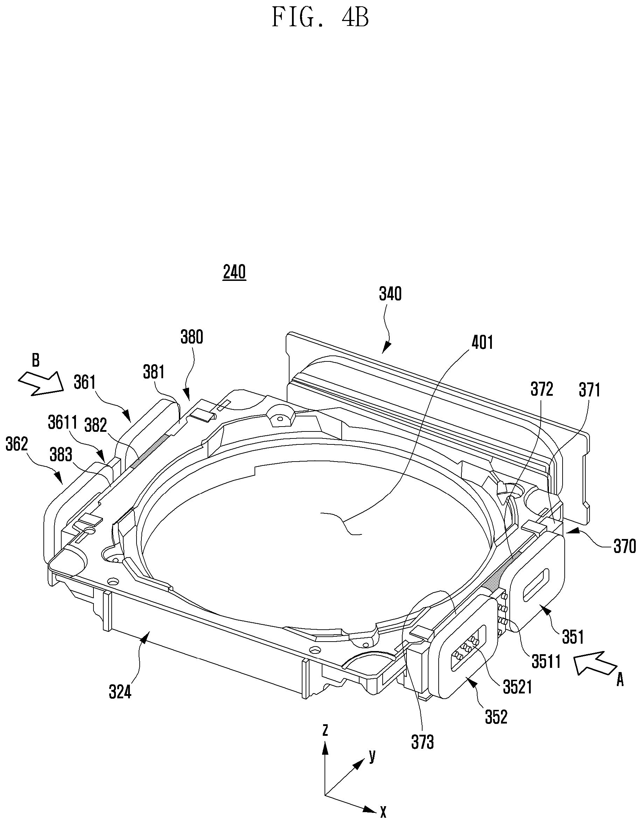

FIG. 4B is a perspective view illustrating the image stabilizer 240 with the lens array 330 removed from FIG. 4A.

In an embodiment of the disclosure, the carrier 324 may include an opening 401 in which the lens array 330 may be mounted.

In an embodiment of the disclosure, the first magnet 370 may have its electromagnetic force controlled by the first coil 351. By controlling the current passing through the first coil 351, the electromagnetic force of the first magnet 370 may be controlled, and the carrier 324 may be moved using the Lorentz force generated by the electromagnetic force.

In an embodiment of the disclosure, a current passing through the first coil 351 may be controlled by the first driving IC 3511.

In an embodiment of the disclosure, the first coil 351 may move the carrier 324 along the second direction (the y-axis direction).

In an embodiment of the disclosure, the second coil 352 disposed on the first side surface A may interact with the first magnet 370 disposed on the carrier 324.

In an embodiment of the disclosure, the first magnet 370 may have its electromagnetic force controlled by the second coil 352. By controlling the current passing through the second coil 352, the electromagnetic force of the first magnet 370 may be controlled, and the carrier 324 may be moved using the solenoid force generated by the electromagnetic force.

In an embodiment of the disclosure, a second driving IC 3521 may control a current passing through the second coil 352.

In an embodiment of the disclosure, the second coil 352 may move the carrier 324 along the first direction (the x-axis direction).

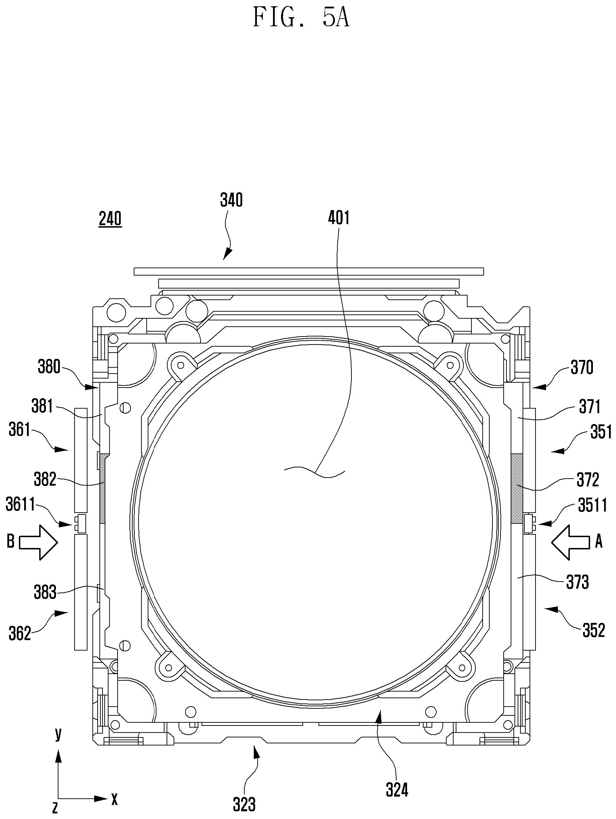

In an embodiment of the disclosure, the third coil 361 disposed on the second side surface B may interact with the second magnet (e.g., the second magnet 380 in FIG. 5A) disposed on the carrier 324.

In an embodiment of the disclosure, the second magnet 380 may have its electromagnetic force controlled by the third coil 361. By controlling the current passing through the third coil 361, the electromagnetic force of the second magnet 380 may be controlled, and the carrier 324 may be moved using the Lorentz force generated by the electromagnetic force.

In an embodiment of the disclosure, a current passing through the third coil 361 may be controlled by a third driving IC 3611.

In an embodiment of the disclosure, the third coil 361 may move the carrier 324 along the second direction (e.g., the y-axis direction).

In an embodiment of the disclosure, the fourth coil 362 disposed on the second side surface A may interact with the second magnet 380 disposed on the carrier 324.

In an embodiment of the disclosure, the second magnet 380 may have its electromagnetic force controlled by the fourth coil 362. By controlling the current passing through the fourth coil 362, the electromagnetic force of the second magnet 380 may be controlled, and the carrier 324 may be moved using the solenoid force generated by the electromagnetic force.

Referring to FIGS. 4A, 4B, and 7, a current passing through the fourth coil 362 may be controlled by the fourth driving IC 3621.

In an embodiment of the disclosure, the fourth coil 362 may move the carrier 324 along the first direction (the x-axis direction).

In an embodiment of the disclosure, the carrier 324 may move along the second direction (e.g., the y-axis direction) by the Lorentz force generated by the first coil 351 and the third coil 361, and the first coil 351 and the third coil 361 may have their currents controlled to allow the carrier 324 to move along the second direction (e.g., the y-axis direction).

In an embodiment of the disclosure, the carrier 324 may move along the first direction (e.g., the x-axis direction) by the solenoid force generated by the second coil 352 and the fourth coil 362, and the second coil 352 and the fourth coil 362 may have their currents controlled to allow the carrier 324 to move along the first direction (e.g., the x-axis direction).

In an embodiment of the disclosure, the first magnet 370 may include a first magnetic element 371, a second magnetic element 372, and a third magnetic element 373. The first coil 351 may control the electromagnetic forces of the first magnetic element 371 and the second magnetic element 372 of the first magnet 370 to move the carrier 324 on the container 323. The second coil 352 may control the electromagnetic force of the third magnetic element 373 of the first magnet 370 to move the carrier 324 on the container 323.

In an embodiment of the disclosure, the second magnet 380 may include a fourth magnetic element 381, a fifth magnetic element 382, and a sixth magnetic element 383. The third coil 361 may control the electromagnetic forces of the fourth magnetic element 381 and the fifth magnetic element 382 of the second magnet 380 to move the carrier 324 on the container 323. The fourth coil 362 may control the electromagnetic force of the sixth magnetic element 383 of the second magnet 380 to move the carrier 324 on the container 323.

FIG. 5A is a plan view of the image stabilizer 240 with the housing 310, the stopper 322, and the lens array 330 removed, according to an embodiment of the disclosure.

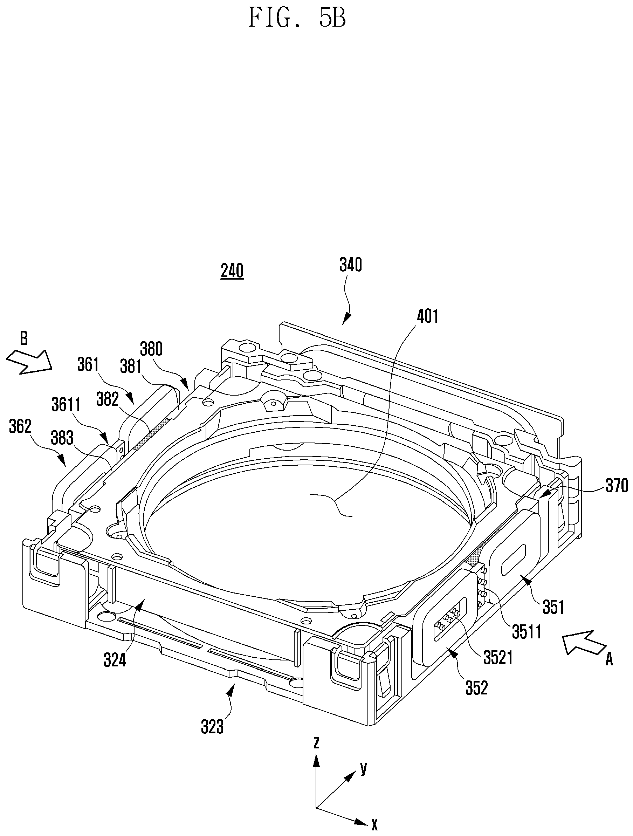

FIG. 5B is a perspective view illustrating the image stabilizer 240 of FIG. 5A.

In an embodiment of the disclosure, the carrier 324 may include an opening 401 in which the lens array 330 may be mounted.

Referring to FIGS. 5A and 5B, the first coil 351 may control the electromagnetic forces of the first magnetic element 371 and the second magnetic element 372 of the first magnet 370 to move the carrier 324 on the container 323. The first coil 351 may control the electromagnetic forces of the first magnetic element 371 and the second magnetic element 372 of the first magnet 370 to move the carrier 324 along the second direction (e.g., the y-axis direction).

The third coil 361 may control the electromagnetic forces of the fourth magnetic element 381 and the fifth magnetic element 382 of the second magnet 380 to move the carrier 324 on the container 323. The third coil 361 may control the electromagnetic forces of the fourth magnetic element 381 and the fifth magnetic element 382 of the second magnet 380 to move the carrier 324 along the second direction (e.g., the y-axis direction).

Referring to FIGS. 5A and 5B, the second coil 352 may control the electromagnetic force of the third magnetic element 373 of the first magnet 370 to move the carrier 324 on the container 323. The second coil 352 may control the electromagnetic force of the third magnetic element 373 of the first magnet 370 to move the carrier 324 along the first direction (e.g., the x-axis direction).

The fourth coil 362 may control the electromagnetic force of the sixth magnetic element 383 of the second magnet 380 to move the carrier 324 on the container 323. The fourth coil 362 may control the electromagnetic force of the sixth magnetic element 383 of the second magnet 380 to move the carrier 324 along the first direction (e.g., the x-axis direction).

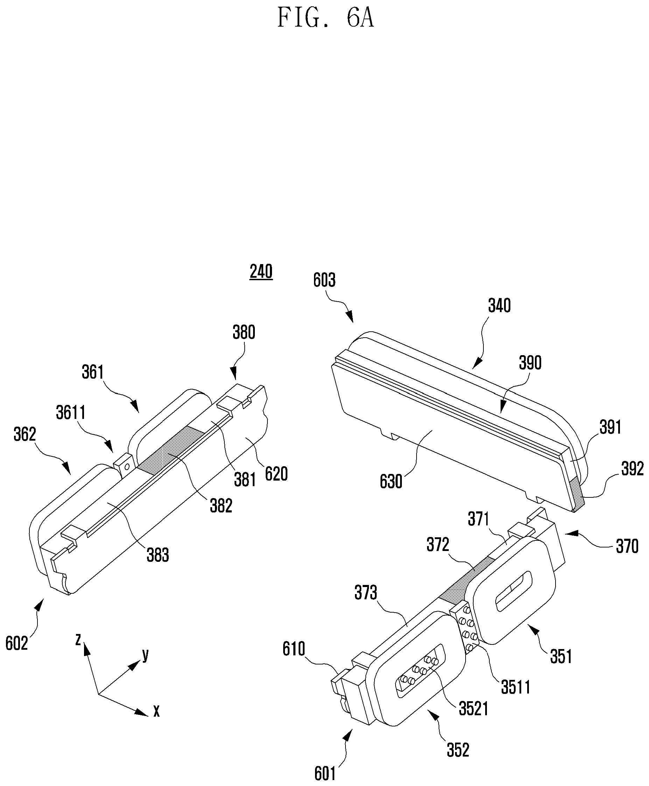

FIG. 6A is a perspective view illustrating a first driving element 601, a second driving element 602, and a third driving element 603 of the image stabilizer 240 according to an embodiment of the disclosure.

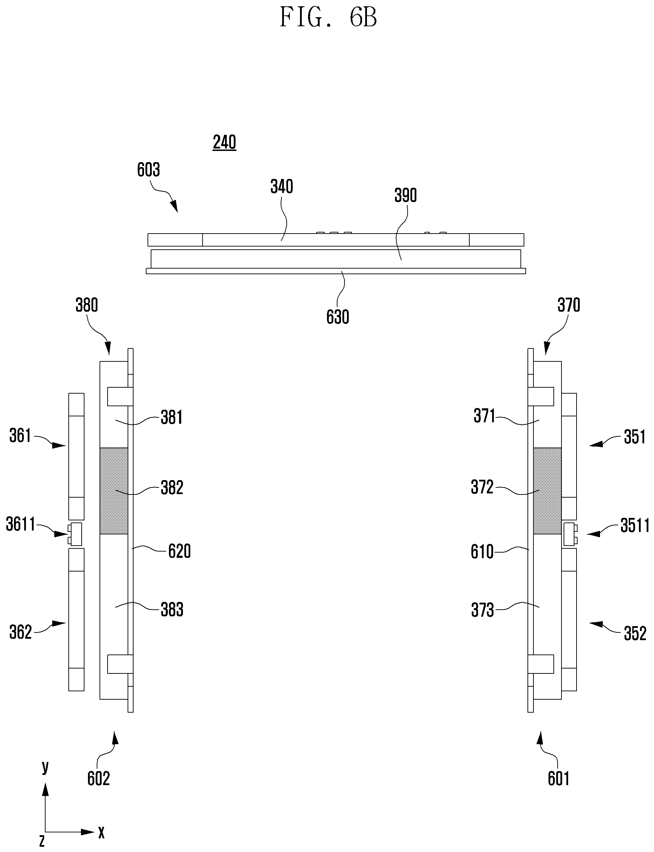

FIG. 6B is a plan view of the first driving element 601, the second driving element 602, and the third driving element 603 of FIG. 6A.

The first driving element 601, the second driving element 602, and the third driving element 603 may be coupled to the actuator 320.

Referring to FIGS. 6A and 6B, the first driving element 601 may include a first coil 351, a second coil 352, a first driving IC 3511, a second driving IC 3521, a first magnet 370, and a first support member 610. The first support member 610 may fix the first magnet 370 to the carrier 324.

Referring to FIGS. 6A and 6B, the second driving element 602 may include a third coil 361, a fourth coil 362, a third driving IC 3611, a fourth driving IC (e.g., the fourth driving IC 3621 in FIG. 7), a second magnet 380, and a second support member 620. The second support member 620 may fix the second magnet 380 to the carrier 324.

Referring to FIGS. 6A and 6B, the third driving element 603 may include an AF coil 340, a third magnet 390, and a third support member 630. The third support member 630 may fix the third magnet 390 to the carrier 324. The third magnet 390 may include a seventh magnetic element 391 and an eighth magnetic element 392. In an embodiment, the carrier 324 may be moved in the third direction (e.g., the z-axis direction) based on the third driving element 603. For example, the third driving element 603 may move the carrier 324 in the third direction (e.g., the z-axis direction) by the Lorentz force generated by the AF coil 340.

Referring to FIGS. 6A and 6B, the first magnet 370 may include a first magnetic element 371, a second magnetic element 372, and a third magnetic element 373. For example, the first magnetic element 371 may be an N-pole, the second magnetic element 372 may be an S-pole, and the third magnetic element 373 may be an N-pole. However, the disclosure is not limited thereto, and the first magnetic element 371 may be an S-pole, the second magnetic element 372 may be an N-pole, and the third magnetic element 373 may be an S-pole.

In an embodiment of the disclosure, the first magnet 370 may be a three-pole magnet in which the first magnetic element 371, the second magnetic element 372, and the third magnetic element 373 are integrated. However, the disclosure is not limited thereto, and the first magnet 370 may be a three-pole magnet fabricated by individually coupling the first magnetic element 371, the second magnetic element 372, and the third magnetic element 373.

In an embodiment of the disclosure, the first magnetic element 371 and the second magnetic element 372 may be integrated, and the third magnetic element 373 may be separated from the first magnetic element 371 and the second magnetic element 372. However, the disclosure is not limited thereto, and the first magnetic element 371, the second magnetic element 372, and the third magnetic element 373 may be integrated.

Referring to FIGS. 6A and 6B, the second magnet 380 may include a fourth magnetic element 381, a fifth magnetic element 382, and a sixth magnetic element 383. For example, the fourth magnetic element 381 may be an N-pole, the fifth magnetic element 382 may be an S-pole, and the sixth magnetic element 383 may be an N-pole. However, the disclosure is not limited thereto, and the fourth magnetic element 381 may be an S-pole, the fifth magnetic element 382 may be an N-pole, and the sixth magnetic element 383 may be an S-pole.

In an embodiment of the disclosure, the second magnet 380 may be a three-pole magnet in which the fourth magnetic element 381, the fifth magnetic element 382, and the sixth magnetic element 383 are integrated. However, the disclosure is not limited thereto, and the second magnet 380 may be a three-pole magnet fabricated by individually coupling the fourth magnetic element 381, the fifth magnetic element 382, and the sixth magnetic element 383.

In an embodiment of the disclosure, the fourth magnetic element 381 and the fifth magnetic element 382 may be integrated, and the sixth magnetic element 383 may be separated from the fourth magnetic element 381 and the fifth magnetic element 382. However, the disclosure is not limited thereto, and the fourth magnetic element 381, the fifth magnetic element 382, and the sixth magnetic element 383 may be integrated.

FIG. 7 is a view illustrating the operation of the image stabilizer 240 according to an embodiment of the disclosure.

In an embodiment of the disclosure, the carrier 324 may move along the second direction (e.g., the y-axis direction) by the Lorentz force generated by the first coil 351 and the third coil 361, and the first coil 351 and the third coil 361 may have their currents controlled to allow the carrier 324 to move along the second direction (e.g., the y-axis direction).

In an embodiment of the disclosure, the carrier 324 may move along the first direction (e.g., the x-axis direction) by the solenoid force generated by the second coil 352 and the fourth coil 362, and the second coil 352 and the fourth coil 362 may have their currents controlled to allow the carrier 324 to move along the first direction (e.g., the x-axis direction).

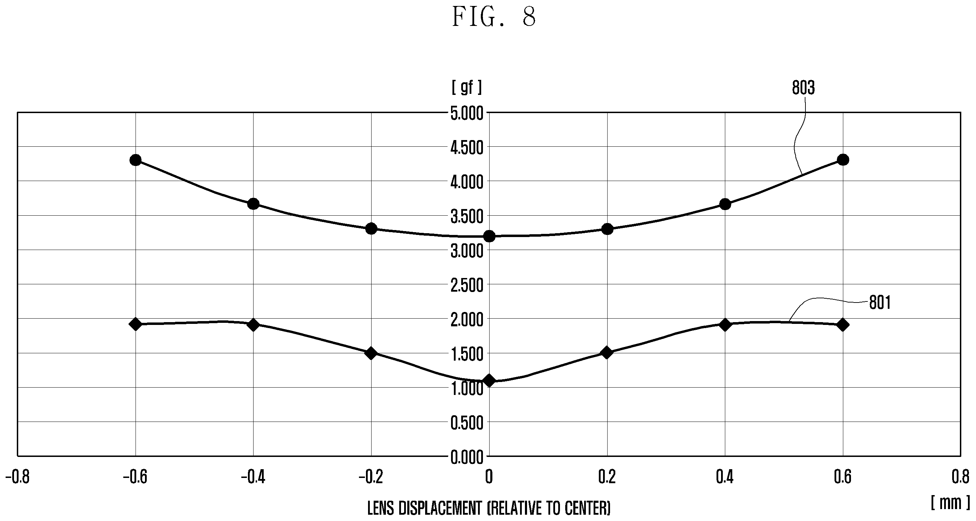

FIG. 8 is a graph illustrating the driving force when the image stabilizer 240 moves in the first direction (e.g., the x-axis direction) according to an embodiment of the disclosure.

Graph 801 represents the required driving force when the image stabilizer 240 moves about 5 degrees in the first direction (e.g., the x-axis direction) with respect to the center.

Graph 803 represents the driving force obtained through electromagnetic analysis when the image stabilizer 240 moves 5 degrees in the first direction (e.g., the x-axis direction) with respect to the center, according to an embodiment of the disclosure.

Comparing Graph 801 and Graph 803, the image stabilizer 240 according to an embodiment of the disclosure may exceed the required driving force when moving 5 degrees in the first direction (e.g., the x-axis direction) with respect to the center.

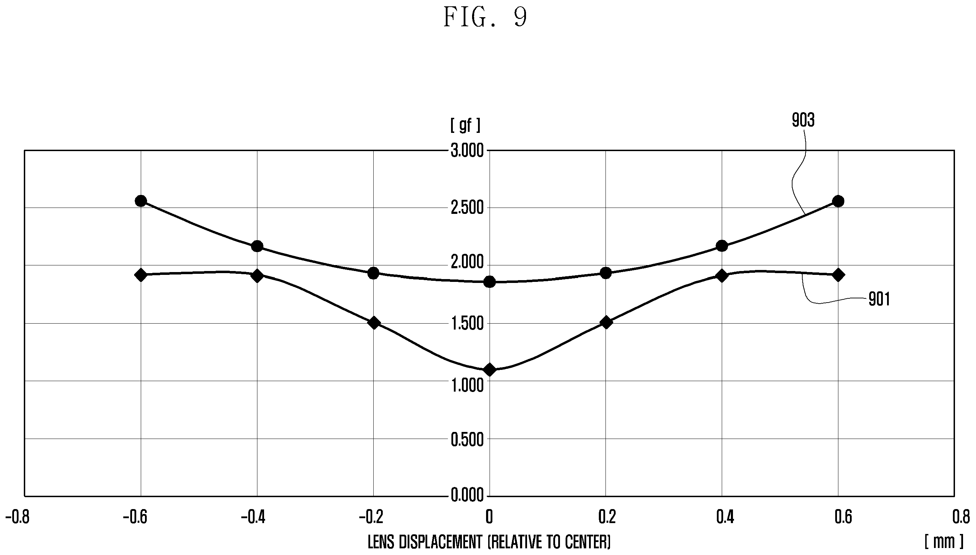

FIG. 9 is a graph illustrating the driving force when the image stabilizer 240 moves in the second direction (e.g., the y-axis direction) according to an embodiment of the disclosure.

Graph 901 represents the required driving force when the image stabilizer 240 moves about 5 degrees in the second direction (e.g., the y-axis direction) with respect to the center.

Graph 903 represents the driving force obtained through electromagnetic analysis when the image stabilizer 240 moves 5 degrees in the second direction (e.g., the y-axis direction) with respect to the center, according to an embodiment of the disclosure.

Comparing Graph 901 and Graph 903, the image stabilizer 240 according to an embodiment of the disclosure may exceed the required driving force when moving 5 degrees in the second direction (e.g., the y-axis direction) with respect to the center.

In an embodiment of the disclosure, the electronic device 101 may include an image stabilizer 240 configured to compensate for shaking of a camera module 180.

In an embodiment of the disclosure, the image stabilizer 240 may include a lens array 330 including at least one lens, an actuator 320 configured to drive the lens array 330 in a first direction (e.g., the x-axis direction) and a second direction (e.g., the y-axis direction) orthogonal to the first direction (e.g., the x-axis direction), and a housing 310 mounted on the actuator 320.

In an embodiment of the disclosure, the actuator 320 may include a stopper 322 configured to restrict movement of the carrier 324 in a third direction (e.g., the z-axis direction) orthogonal to the first direction (e.g., the x-axis direction) and the second direction (e.g., the y-axis direction), a carrier 324 including multiple magnets 370 and 380 on a first side surface A in the second direction (e.g., the y-axis direction) and a second side surface B parallel to the first side surface, and a container 323 including multiple coils 351, 352, 361, and 362 corresponding to the multiple magnets 370 and 380 and configured to control electromagnetic forces of the multiple magnets 370 and 380.

In an embodiment of the disclosure, the multiple magnets 370 and 380 may include a first magnet 370 disposed on the first side surface and a second magnet 380 disposed on the second side surface B.

In an embodiment of the disclosure, the first magnet 370 may include a first magnetic element 371 having a first pole, a second magnetic element 372 having a second pole, and a third magnetic element 373 having the first pole.

In an embodiment of the disclosure, in the first magnet 370, the first magnetic element 371, the second magnetic element 372, and the third magnetic element 373 may be integrally coupled.

In an embodiment of the disclosure, in the first magnet 370, the first magnetic element 371 and the second magnetic element 372 may be integrally coupled, and the third magnetic element 373 may be separated.

In an embodiment of the disclosure, the second magnet 380 may include a fourth magnetic element 381 having a first pole, a fifth magnetic element 382 having a second pole, and a sixth magnetic element 383 having the first pole.

In an embodiment of the disclosure, in the second magnet 380, the fourth magnetic element 381, the fifth magnetic element 382, and the sixth magnetic element 383 may be integrally coupled.

In an embodiment of the disclosure, in the second magnet 380, the fourth magnetic element 381 and the fifth magnetic element 382 may be integrally coupled, and the sixth magnetic element 383 may be separated.

In an embodiment of the disclosure, the multiple coils 351, 352, 361, and 362 may include a first coil 351 disposed on the first side surface of the container 323 and corresponding to the first magnet 370, and a second coil 352 disposed on the first side surface of the container 323 and corresponding to the first magnet 370.

In an embodiment of the disclosure, the multiple coils 351, 352, 361, and 362 may include a third coil 361 disposed on the second side surface B of the container 323 and corresponding to the second magnet 380, and a fourth coil 362 disposed on the second side surface B of the container 323 and corresponding to the second magnet 380.

In an embodiment of the disclosure, the multiple coils 351, 352, 361, and 362 may include a first coil 351 corresponding to the first magnetic element 371 and the second magnetic element 372 and configured to move the carrier 324 along the second direction (e.g., the y-axis direction), and a second coil 352 corresponding to the third magnetic element 373 and configured to move the carrier 324 along the first direction (e.g., the x-axis direction).

In an embodiment of the disclosure, the electronic device may further include a first driving IC 3511 configured to control a current of the first coil 351, and a second driving IC 3521 configured to control a current of the second coil 352.

In an embodiment of the disclosure, the multiple coils 351, 352, 361, and 362 may include a third coil 351 corresponding to the fourth magnetic element 381 and the fifth magnetic element 382 and configured to move the carrier 324 along the second direction (e.g., the y-axis direction), and a fourth coil 352 corresponding to the sixth magnetic element 383 and configured to move the carrier 324 along the first direction (e.g., the x-axis direction).

In an embodiment of the disclosure, the electronic device may include a third driving IC 3611 configured to control a current of the third coil 361, and a fourth driving IC 3621 configured to control a current of the fourth coil 362.

In an embodiment of the disclosure, the actuator 320 may include an AF coil 340 and a third magnet 390 disposed in the first direction of the carrier 324 (e.g., the x-axis direction) and configured to move the carrier 324 along the third direction (e.g., the z-axis direction).

In an embodiment of the disclosure, the image stabilizer 240 may include a lens array 330 including at least one lens, an actuator 320 configured to drive the lens array 330 in a first direction (e.g., the x-axis direction) and a second direction (e.g., the y-axis direction) orthogonal to the first direction, and a housing 310 mounted on the actuator 320.

In an embodiment of the disclosure, the actuator 320 may include a stopper 322 configured to restrict movement of the carrier 324 in a third direction (e.g., the z-axis direction) orthogonal to the first direction (e.g., the x-axis direction) and the second direction (e.g., the y-axis direction), a carrier 324 including multiple magnets 370 and 380 on a first side surface A in the second direction (e.g., the y-axis direction) and a second side surface B parallel to the first side surface, and a container 323 including multiple coils 351, 352, 361, and 362 corresponding to the multiple magnets 370 and 380 and configured to control electromagnetic forces of the multiple magnets 370 and 380.

In an embodiment of the disclosure, the multiple magnets 370 and 380 may include a first magnet 370 disposed on the first side surface and a second magnet 380 disposed on the second side surface B.

In an embodiment of the disclosure, the first magnet 370 may include a first magnetic element 371 having a first pole, a second magnetic element 372 having a second pole, and a third magnetic element 373 having the first pole.

In an embodiment of the disclosure, the second magnet 380 may include a fourth magnetic element 381 having a first pole, a fifth magnetic element 382 having a second pole, and a sixth magnetic element 383 having the first pole.

In an embodiment of the disclosure, the multiple coils 351, 352, 361, and 362 may include a first coil 351 corresponding to the first magnetic element 371 and the second magnetic element 372 and configured to move the carrier 324 along the second direction, and a second coil 352 corresponding to the third magnetic element 373 and configured to move the carrier 324 along the first direction.

In an embodiment of the disclosure, the multiple coils 351, 352, 361, and 362 may include a third coil 361 corresponding to the fourth magnetic element 381 and the fifth magnetic element 382 and configured to move the carrier 324 along the second direction, and a fourth coil 352 corresponding to the sixth magnetic element 383 and configured to move the carrier 324 along the first direction.

The electronic device according to various embodiments set forth herein may be one of various types of electronic devices. The electronic device may include, for example, a portable communication device (e.g., a smart phone), a computer device, a portable multimedia device, a portable medical device, a camera, a wearable device, or a home appliance. The electronic device according to embodiments of the disclosure is not limited to those described above.

It should be appreciated that various embodiments of the disclosure and the terms used therein are not intended to limit the technological features set forth herein to particular embodiments and the disclosure includes various changes, equivalents, or alternatives for a corresponding embodiment. With regard to the description of the drawings, similar reference numerals may be used to designate similar or relevant elements. A singular form of a noun corresponding to an item may include one or more of the items, unless the relevant context clearly indicates otherwise. As used herein, each of such phrases as "A or B," "at least one of A and B," "at least one of A or B," "A, B, or C," "at least one of A, B, and C," and "at least one of A, B, or C" may include all possible combinations of the items enumerated together in a corresponding one of the phrases. Such terms as "a first," "a second," "the first," and "the second" may be used to simply distinguish a corresponding element from another, and does not limit the elements in other aspect (e.g., importance or order). If an element (e.g., a first element) is referred to, with or without the term "operatively" or "communicatively", as "coupled with/to" or "connected with/to" another element (e.g., a second element), it means that the element may be coupled/connected with/to the other element directly (e.g., wiredly), wirelessly, or via a third element.

As used here in, the term "module" may include a unit implemented in hardware, software, or firmware, and may interchangeably be used with other terms, for example, "logic", "logic block", "part", or "circuitry". The "module" may be a single integrated component, or a minimum unit or part thereof, adapted to perform one or more functions. For example, according to an embodiment, the "module" may be implemented in the form of an application-specific integrated circuit (ASIC).

Various embodiments as set forth herein may be implemented as software (e.g., the program 140) including one or more instructions that are stored in a storage medium (e.g., the internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Herein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, methods according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., Play Store TM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each element (e.g., a module or a program) of the above-described elements may include a single entity or multiple entities. According to various embodiments, one or more of the above-described elements or operations may be omitted, or one or more other elements or operations may be added. Alternatively or additionally, a plurality of elements (e.g., modules or programs) may be integrated into a single element. In such a case, according to various embodiments, the integrated element may still perform one or more functions of each of the plurality of elements in the same or similar manner as they are performed by a corresponding one of the plurality of elements before the integration. According to various embodiments, operations performed by the module, the program, or another element may be carried out sequentially, in parallel, repeatedly, or heuristically, or one or more of the operations may be executed in a different order or omitted, or one or more other operations may be added.

## Claims

1. An electronic device comprising:
an image stabilizer configured to compensate for shaking of a camera module,
wherein the image stabilizer comprises:
a lens array comprising at least one lens;
an actuator configured to drive the lens array in a first direction and in a second direction orthogonal to the first direction; and
a housing mounted on the actuator, and
wherein the actuator comprises:
a stopper configured to restrict movement of a carrier in a third direction orthogonal to the first direction and the second direction;
the carrier comprising multiple magnets on a first side surface in the second direction and a second side surface parallel to the first side surface; and
a container comprising multiple coils corresponding to the multiple magnets and configured to control electromagnetic forces of the multiple magnets.

2. The electronic device of claim 1, wherein the multiple magnets comprise:
a first magnet disposed on the first side surface; and
a second magnet disposed on the second side surface.

3. The electronic device of claim 2, wherein the first magnet comprises:
a first magnetic element having a first pole;
a second magnetic element having a second pole; and
a third magnetic element having the first pole.

4. The electronic device of claim 3, wherein, in the first magnet, the first magnetic element, the second magnetic element, and the third magnetic element are integrally coupled.

5. The electronic device of claim 3, wherein, in the first magnet, the first magnetic element and the second magnetic element are integrally coupled, and the third magnetic element is separated.

6. The electronic device of claim 2, wherein the second magnet comprises:
a fourth magnetic element having a first pole;
a fifth magnetic element having a second pole; and
a sixth magnetic element having the first pole.

7. The electronic device of claim 6, wherein, in the second magnet, the fourth magnetic element, the fifth magnetic element, and the sixth magnetic element are integrally coupled.

8. The electronic device of claim 6, wherein, in the second magnet, the fourth magnetic element and the fifth magnetic element are integrally coupled, and the sixth magnetic element is separated.

9. The electronic device of claim 2, wherein the multiple coils comprise:
a first coil disposed on the first side surface of the container and corresponding to the first magnet; and
a second coil disposed on the first side surface of the container and corresponding to the first magnet.

10. The electronic device of claim 2, wherein the multiple coils comprise:
a third coil disposed on the second side surface of the container and corresponding to the second magnet; and
a fourth coil disposed on the second side surface of the container and corresponding to the second magnet.

11. The electronic device of claim 3, wherein the multiple coils comprise:
a first coil corresponding to the first magnetic element and the second magnetic element and configured to move the carrier along the second direction; and
a second coil corresponding to the third magnetic element and configured to move the carrier along the first direction.

12. The electronic device of claim 11, further comprising:
a first driving IC configured to control a current of the first coil; and
a second driving IC configured to control a current of the second coil.

13. The electronic device of claim 3, wherein the multiple coils comprise:
a third coil corresponding to the fourth magnetic element and the fifth magnetic element and configured to move the carrier along the second direction; and
a fourth coil corresponding to the sixth magnetic element and configured to move the carrier along the first direction.

14. The electronic device of claim 13, further comprising:
a third driving IC configured to control a current of the third coil; and
a fourth driving IC configured to control a current of the fourth coil.

15. The electronic device of claim 1, wherein the actuator comprises an AF coil and a third magnet disposed in a first direction of the carrier and configured to move the carrier along the third direction.
